# EUROPEAN PATENT APPLICATION

(11) **EP 4 618 598 A1**
(43) Date of publication of application: **17.09.2025**
(21) Application number: 23910475.5
(22) Date of filing: 25.12.2023
(51) Int. Cl.: H04W 4/12

(54) **COMMUNICATION METHOD AND RELATED APPARATUS**

(30) Priority: 30.12.2022 CN 202211729419
(71) Applicant: Huawei Technologies Co., Ltd., Shenzhen, Guangdong 518129 (CN)
(72) Inventor: YUAN, Ping, Shenzhen, Guangdong 518129 (CN)
(74) Representative: Grünecker Patent- und Rechtsanwälte PartG mbB
(86) International application number: PCT/CN2023/141501
(87) International publication number: WO 2024/140549

(57) **Abstract**

Embodiments of this application provide a communication method and a related apparatus. The method includes: A terminal device sends a first message carrying a first chatbot identifier chatbot ID to a server, where the first chatbot ID corresponds to a plurality of chatbot servers. The server sends a second message to a target chatbot server based on the first message, where a second chatbot ID is obtained based on target configuration information and the first chatbot ID, the second message carries the second chatbot ID, the target configuration information indicates that the first chatbot ID is mapped to the second chatbot ID by using a constraint of information about the terminal device, and the second chatbot ID corresponds to the target chatbot server. In this way, the first message of the terminal device can reach the target chatbot server, so that the terminal device replies to the chatbot server with a 5G message, improving user experience.

## Description

This application claims priority to Chinese Patent Application No. CN202211729419.1, filed with the China National Intellectual Property Administration on December 30, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

A 5th generation mobile communication technology (5th Generation Mobile Communication Technology, 5G) message is a basic telecommunication service of an operator. 5G messages provide enhanced messaging services for users based on conventional SMS messaging in mobile phones, allow users to send and receive media content such as texts, pictures, audio, videos, locations, and contacts, and support many functions of OTT (Over The Top) applications such as conversation, group chat, and applet, and other service applications (APPs).

Currently, 5G messages are sent through a 5G message center (5th Generation Message Center, 5GMC). 5G messaging services are classified into two types: interactive messages between individual users (P2P) and interactive messages between applications and individual users (namely, a point to application service (P2A) and an application to point service (Application to point service, A2P)). Chatbots (chatbots) are required for interaction between individual users and applications.

In a scenario of 5G message interaction between a user and an application, each application usually corresponds to a unique chatbot identifier (chatbot ID). An operator application is used as an example. An operator covers services in different areas. Therefore, an operator has corresponding unique chatbot IDs for services in different areas. For example, a chatbot ID of "China Mobile" in Guangdong is "10086020", and a chatbot ID of "China Mobile" in Beijing is "10086010". To reduce user learning costs and improve usage convenience, current 5G messages can convert a plurality of independent chatbot IDs of services of a same type into one chatbot ID (referred to as a unified chatbot ID) and present it to users. For example, the users receive 5G messages of "China Mobile" in Guangdong or Beijing, and chatbot IDs of the 5G messages of "China Mobile" are all "10086".

However, the current solution of converting a plurality of independent chatbot IDs into a unified chatbot ID and presenting it to users cannot support the users in replying to the unified chatbot ID with a 5G message. After receiving the 5G message replied by the user to the unified chatbot ID, a server cannot learn of a chatbot corresponding to an independent chatbot ID to which the 5G message needs to be forwarded. Consequently, user experience is reduced, and services are limited.

### SUMMARY

According to a first aspect, an embodiment of this application provides a communication method. The method includes:

A server receives a first message from a terminal device, where the first message carries a first chatbot identifier chatbot ID, and the first chatbot ID corresponds to a plurality of chatbot servers.

The server sends a second message to a target chatbot server, where a second chatbot ID is obtained based on target configuration information and the first chatbot ID, the second message carries the second chatbot ID, the target configuration information indicates that the first chatbot ID is mapped to the second chatbot ID by using a constraint of information about the terminal device, the second chatbot ID corresponds to the target chatbot server, and the target chatbot server belongs to the plurality of chatbot servers. The second chatbot ID to which the first chatbot ID is mapped can be determined based on the information about the terminal device.

Specifically, the first chatbot ID is associated with a plurality of applications, and each application is associated with at least one chatbot server. Therefore, the first chatbot ID corresponds to the plurality of chatbot servers, and the first chatbot ID may be considered as a unified chatbot ID. For example, a unified chatbot ID of an operator service is "12345". The second chatbot ID corresponds to the target chatbot server. Therefore, the second chatbot ID may be considered as an independent chatbot ID. For example, an operator service has an independent service in Guangdong, and the independent service corresponds to a group of independent chatbot servers referred to as Guangdong operator chatbot servers. A chatbot ID corresponding to the independent service of the operator service in Guangdong is "12345020". The independent chatbot ID "12345020" corresponds to the Guangdong operator chatbot servers.

The first message sent by the terminal device to the server carries the first chatbot ID. The server determines the target configuration information based on the first message, where the target configuration information indicates that the first chatbot ID is mapped to the second chatbot ID by using the constraint of the information about the terminal device, and the second chatbot ID corresponds to the target chatbot server. The server determines, based on the second chatbot ID recorded in the target configuration information, that a destination of the first message is the target chatbot server. The server processes the first message based on the target configuration information, to generate the second message carrying the second chatbot ID, and sends the second message to the target chatbot server. For example, the first chatbot ID carried in the first message is replaced with the second chatbot ID, to obtain the second message. In this way, the first message of the terminal device can reach the target chatbot server, so that the terminal device replies to the chatbot server with the message, improving user experience.

In a possible implementation, the first message is a 5th generation mobile communication technology 5G message. 5G messages provide point-to-point message and group chat services for individual users. In addition to a text, 5G messages can further support content forms such as a picture, audio, a video, a location, and a contact. A user can send and receive 5G messages from other mobile users without downloading a client or adding friends. 5G messages provide enhanced message services between individuals and applications for industry customers, implementing "message as a service". In addition, a new message interaction mode, namely, a chatbot (Chatbot), is introduced, so that a user can intuitively and conveniently enjoy various 5G application services such as payment and recharge, ticket ordering, hotel booking, logistics query, catering booking, and take-out orders in a message window.

In a possible implementation, the first message is a voice message.

In a possible implementation, the first message further includes identification information of the terminal device. The identification information of the terminal device may be a number of the terminal device, for example, "13200000000". In another possible implementation, the identification information of the terminal device may alternatively be an internet protocol (Internet Protocol, IP) address of the terminal device. This is not limited in this embodiment of this application.

In a possible implementation, the server determines the target configuration information based on the identification information of the terminal device that is carried in the first message, where the target configuration information includes an association relationship among a home location of the terminal device, the first chatbot ID, and the second chatbot ID, the information about the terminal device is the home location of the terminal device, and the home location of the terminal device is determined based on the identification information of the terminal device.

Specifically, when the identification information of the terminal device is a number of the terminal device, the server determines, based on the number of the terminal device, a number segment to which the number of the terminal device belongs; and the server determines the home location of the terminal device based on the number segment to which the number of the terminal device belongs. For example, based on a number of UE #1, it is found that a home location of the UE #1 is Beijing. Based on a number of UE #2, a home location of the UE #2 is Guangzhou. The home location of the terminal device is the information about the terminal device, and the second chatbot ID to which the first chatbot ID is mapped is determined based on the home location of the terminal device.

For example, the foregoing processing mode is applicable to a service, for example, an operator service, related to the home location of the terminal device.

In a possible implementation, when the identification information of the terminal device is a number of the terminal device, the home location of the terminal device is determined based on a number segment to which the number of the terminal device belongs.

In a possible implementation, the server determines the target configuration information based on the identification information of the terminal device that is carried in the first message, where a location of the terminal device is determined based on the identification information of the terminal device, and the target configuration information includes the association relationship among the location of the terminal device, the first chatbot ID, and the second chatbot ID. Specifically, the server determines the location of the terminal device based on the identification information of the terminal device that is carried in the first message. The server determines the target configuration information from a configuration information set based on the location of the terminal device and the first chatbot ID. The target configuration information indicates the association relationship among the location of the terminal device, the first chatbot ID, and the second chatbot ID. The configuration information set includes one or more pieces of configuration information. The information about the terminal device is the location of the terminal device, and the location of the terminal device is determined based on the identification information of the terminal device. The location of the terminal device is the information about the terminal device, and the second chatbot ID to which the first chatbot ID is mapped is determined based on the location of the terminal device.

Specifically, when the identification information of the terminal device is the number of the terminal device, the server obtains the location of the terminal device from a home location register HLR based on the number of the terminal device.

For example, the foregoing processing mode is applicable to a region-related service, including but not limited to a banking service, a citizen hotline, a water supply service, a power supply service, a hospital, a school, a broadband service, or the like.

In a possible implementation, the server sends a first menu to the terminal device based on the first message, where the first menu corresponds to the first chatbot ID, and the first menu corresponds to a configuration information set; the server receives a third message from the terminal device, where the third message indicates a selection result, the selection result corresponds to the target configuration information, and the target configuration information belongs to the configuration information set; and the server determines the target configuration information from the configuration information set based on the third message. The information about the terminal device is the selection result. The second chatbot ID to which the first chatbot ID is mapped is determined based on the selection result.

In this embodiment of this application, the server can freely configure that the first chatbot ID is mapped to the second chatbot ID by using the constraint of the information about the terminal device. The server determines, based on the selection result of the terminal device, the second chatbot ID corresponding to the current first chatbot ID, to implement flexible service configuration.

In a possible implementation, the first menu is carried in a 5G message, and the third message is a 5G message.

In a possible implementation, the first message uses a session initiation protocol SIP.

In a possible implementation, that the server sends the second message to the target chatbot server includes: The server forwards the second message to the target chatbot server through a messaging as a platform MaaP.

In a possible implementation, the server is deployed in a 5G message center 5GMC.

According to a second aspect, an embodiment of this application provides a communication method. The method includes:

A terminal device sends a first message to a server, where the first message carries a first chatbot identifier chatbot ID.

The terminal device receives a first menu from the server, where the first menu corresponds to the first chatbot ID, and the first menu corresponds to a configuration information set.

The terminal device sends a third message to the server, where the third message indicates a selection result, the selection result corresponds to target configuration information, the target configuration information belongs to the configuration information set, the target configuration information indicates that the first chatbot ID is mapped to a second chatbot ID by using a constraint of information about the terminal device, the second chatbot ID corresponds to a target chatbot server, the target chatbot server is configured to process a second message, the second message is obtained by processing the first message, the second message carries the second chatbot ID, and the information about the terminal device is the selection result. The server determines, based on the selection result, the second chatbot ID to which the first chatbot ID is mapped.

Specifically, the first chatbot ID is associated with a plurality of applications, and the first chatbot ID may be considered as a unified chatbot ID. For example, a unified chatbot ID of an operator service is "12345". The second chatbot ID corresponds to the target chatbot server. Therefore, the second chatbot ID may be considered as an independent chatbot ID. For example, an operator service has an independent service in Guangdong, and the independent service corresponds to a group of independent chatbot servers referred to as Guangdong operator chatbot servers. A chatbot ID corresponding to the independent service of the operator service in Guangdong is "12345020". The independent chatbot ID "12345020" corresponds to the Guangdong operator chatbot servers.

The first message sent by the terminal device to the server carries the first chatbot ID. The server determines, based on the first chatbot ID carried in the first message, to send the first menu to the terminal device, where the first menu includes one or more options. Each option corresponds to a piece of configuration information. Each piece of configuration information indicates an association relationship between the first chatbot ID and the second chatbot ID.

The terminal device determines the selection result from the first menu, and configuration information corresponding to the selection result is referred to as the target configuration information. In this way, the server determines the target configuration information based on the selection result, and then processes the first message based on the target configuration information to obtain the second message, where the second message carries the second chatbot ID. The server sends the second message to the target chatbot server. In this way, the first message of the terminal device can reach the target chatbot server, so that the terminal device replies to the chatbot server with the message, improving user experience.

In a possible implementation, the first message is a 5th generation mobile communication technology 5G message, the first menu is carried in a 5G message, and the third message is a 5G message.

5G messages provide point-to-point message and group chat services for individual users. In addition to a text, 5G messages can further support content forms such as a picture, audio, a video, a location, and a contact. A user can send and receive 5G messages from other mobile users without downloading a client or adding friends. 5G messages provide enhanced message services between individuals and applications for industry customers, implementing "message as a service". In addition, a new message interaction mode, namely, a chatbot (Chatbot), is introduced, so that a user can intuitively and conveniently enjoy various 5G application services such as payment and recharge, ticket ordering, hotel booking, logistics query, catering booking, and take-out orders in a message window.

**In** a possible implementation, the first message is a voice message.

According to a third aspect, an embodiment of this application provides a computing apparatus. The computing apparatus is used in a server, and the computing apparatus includes:
a transceiver module, configured to receive a first message from a terminal device, where the first message carries a first chatbot identifier chatbot ID, and the first chatbot ID corresponds to a plurality of chatbot servers.

The transceiver module is further configured to send a second message to a target chatbot server, where the second message carries a second chatbot ID, the second chatbot ID is obtained based on target configuration information and the first chatbot ID, the target configuration information indicates that the first chatbot ID is mapped to the second chatbot ID by using a constraint of information about the terminal device, the second chatbot ID corresponds to the target chatbot server, and the target chatbot server belongs to the plurality of chatbot servers.

**In** a possible implementation, the first message is a 5th generation mobile communication technology 5G message.

**In** a possible implementation, the first message further includes identification information of the terminal device.

**In** a possible implementation, the computing apparatus further includes a processing module.

The processing module is configured to determine the target configuration information based on the identification information of the terminal device that is carried in the first message, where the target configuration information includes an association relationship among a home location of the terminal device, the first chatbot ID, and the second chatbot ID, the information about the terminal device is the home location of the terminal device, and the home location of the terminal device is determined based on the identification information of the terminal device.

**In** a possible implementation, when the identification information of the terminal device is a number of the terminal device, the home location of the terminal device is determined based on a number segment to which the number of the terminal device belongs.

**In** a possible implementation, the computing apparatus further includes a processing module.

The processing module is configured to determine the target configuration information based on the identification information of the terminal device that is carried in the first message, where the target configuration information includes an association relationship among a location of the terminal device, the first chatbot ID, and the second chatbot ID, the information about the terminal device is the location of the terminal device, and the location of the terminal device is determined based on the identification information of the terminal device.

In a possible implementation, the processing module is further configured to send a first menu to the terminal device based on the first message, where the first menu corresponds to the first chatbot ID, and the first menu corresponds to a configuration information set.

The transceiver module is further configured to receive a third message from the terminal device, where the third message indicates a selection result, the selection result corresponds to the target configuration information, and the target configuration information belongs to the configuration information set.

The processing module is further configured to determine the target configuration information from the configuration information set based on the third message, where the information about the terminal device is the selection result.

In a possible implementation, the first menu is carried in a 5G message, and the third message is a 5G message.

In a possible implementation, the first message uses a session initiation protocol SIP.

In a possible implementation, the transceiver module is further configured to forward the second message to the target chatbot server through a messaging as a platform MaaP.

In a possible implementation, the server is deployed in a 5G message center 5GMC.

According to a fourth aspect, an embodiment of this application provides a computing apparatus. The computing apparatus is used in a terminal device, and the computing apparatus includes:
a transceiver module, configured to send a first message to a server, where the first message carries a first chatbot identifier chatbot ID.

The transceiver module is further configured to receive a first menu from the server, where the first menu corresponds to the first chatbot ID, and the first menu corresponds to a configuration information set.

The transceiver module is further configured to send a third message to the server, where the third message indicates a selection result, the selection result corresponds to target configuration information, the target configuration information belongs to the configuration information set, the target configuration information indicates that the first chatbot ID is mapped to a second chatbot ID by using a constraint of information about the terminal device, the second chatbot ID corresponds to a target chatbot server, the target chatbot server is configured to process a second message, the second message is obtained by processing the first message, the second message carries the second chatbot ID, and the information about the terminal device is the selection result.

**In** a possible implementation, the first message is a 5th generation mobile communication technology 5G message.

The first menu is carried in a 5G message.

The third message is a 5G message.

According to a fifth aspect, an embodiment of this application provides a computing apparatus. The computing apparatus is used in a server, and the computing apparatus includes:
a communication interface, configured to receive a first message from a terminal device, where the first message carries a first chatbot identifier chatbot ID, and the first chatbot ID corresponds to a plurality of chatbot servers.

The communication interface is further configured to send a second message to a target chatbot server, where the second message carries a second chatbot ID, the second chatbot ID is obtained based on target configuration information and the first chatbot ID, the target configuration information indicates that the first chatbot ID is mapped to the second chatbot ID by using a constraint of information about the terminal device, the second chatbot ID corresponds to the target chatbot server, and the target chatbot server belongs to the plurality of chatbot servers.

**In** a possible implementation, the first message is a 5th generation mobile communication technology 5G message.

**In** a possible implementation, the first message further includes identification information of the terminal device.

**In** a possible implementation, the computing apparatus further includes a processor.

The processor is configured to determine the target configuration information based on the identification information of the terminal device that is carried in the first message, where a home location of the terminal device is determined based on the identification information of the terminal device, the target configuration information includes an association relationship among the home location of the terminal device, the first chatbot ID, and the second chatbot ID, the information about the terminal device is the home location of the terminal device, and the home location of the terminal device is determined based on the identification information of the terminal device.

**In** a possible implementation, when the identification information of the terminal device is a number of the terminal device, the home location of the terminal device is determined based on a number segment to which the number of the terminal device belongs.

**In** a possible implementation, the computing apparatus further includes a processor.

The processor is configured to determine the target configuration information based on the identification information of the terminal device that is carried in the first message, where a location of the terminal device is determined based on the identification information of the terminal device, the target configuration information includes an association relationship among the location of the terminal device, the first chatbot ID, and the second chatbot ID, the information about the terminal device is the location of the terminal device, and the location of the terminal device is determined based on the identification information of the terminal device.

In a possible implementation, the processor is further configured to send a first menu to the terminal device based on the first message, where the first menu corresponds to the first chatbot ID, and the first menu corresponds to a configuration information set.

The communication interface is further configured to receive a third message from the terminal device, where the third message indicates a selection result, the selection result corresponds to the target configuration information, and the target configuration information belongs to the configuration information set.

The processor is further configured to determine the target configuration information from the configuration information set based on the third message, where the information about the terminal device is the selection result.

In a possible implementation, the first menu is carried in a 5G message, and the third message is a 5G message.

In a possible implementation, the first message uses a session initiation protocol SIP.

In a possible implementation, the communication interface is further configured to forward the second message to the target chatbot server through a messaging as a platform MaaP.

In a possible implementation, the server is deployed in a 5G message center 5GMC.

According to a sixth aspect, an embodiment of this application provides a computing apparatus. The computing apparatus is used in a terminal device, and the computing apparatus includes:
a communication interface, configured to send a first message to a server, where the first message carries a first chatbot identifier chatbot ID.

The communication interface is further configured to receive a first menu from the server, where the first menu corresponds to the first chatbot ID, and the first menu corresponds to a configuration information set.

The communication interface is further configured to send a third message to the server, where the third message indicates a selection result, the selection result corresponds to target configuration information, the target configuration information belongs to the configuration information set, the target configuration information indicates that the first chatbot ID is mapped to a second chatbot ID by using a constraint of information about the terminal device, the second chatbot ID corresponds to a target chatbot server, the target chatbot server is configured to process a second message, the second message is obtained by processing the first message, the second message carries the second chatbot ID, and the information about the terminal device is the selection result.

**In** a possible implementation, the first message is a 5th generation mobile communication technology 5G message.

The first menu is carried in a 5G message.

The third message is a 5G message.

According to a seventh aspect, this application provides a computing apparatus, including at least one memory and a processor. The memory stores code, and the processor is configured to execute the code, so that the computing apparatus performs the method according to any one of the first aspect or the possible implementations of the first aspect, or performs the method according to any one of the second aspect or the possible implementations of the second aspect.

According to an eighth aspect, this application provides a computer storage medium. The computer storage medium stores a computer program. When the program is executed by a computer, the computer is enabled to implement the method according to any one of the first aspect or the possible implementations of the first aspect, or implement the method according to any one of the second aspect or the possible implementations of the second aspect.

According to a ninth aspect, this application provides a computer program product. When the computer product is executed by a computer, the method according to any one of the first aspect or the possible implementations of the first aspect is implemented, or the method according to any one of the second aspect or the possible implementations of the second aspect is implemented.

According to a tenth aspect, an embodiment of this application provides a circuit system. The circuit system includes a processing circuit, and the processing circuit is configured to perform the method according to any one of the first aspect or the possible implementations of the first aspect, or perform the method according to any one of the second aspect or the possible implementations of the second aspect.

According to an eleventh aspect, this application provides a chip system, including a processor and a memory. The memory is configured to store a computer program, and the processor is configured to invoke and run the computer program stored in the memory, to perform the method according to any one of the first aspect or the possible implementations of the first aspect, or perform the method according to any one of the second aspect or the possible implementations of the second aspect. The chip system may include a chip, or may include a chip and another discrete component.

### BRIEF DESCRIPTION OF DRAWINGS

FIG. 1 is a diagram of an architecture of a communication system 1000 used in an embodiment of this application;
FIG. 2 is a diagram of a structure of an internet 300 according to an embodiment of this application;
FIG. 3 is a diagram of another structure of an internet 300 according to an embodiment of this application;
FIG. 4 is a diagram of another structure of an internet 300 according to an embodiment of this application;
FIG. 5 is a diagram of another structure of an internet 300 according to an embodiment of this application;
FIG. 6 is a diagram of interaction between a chatbot server and a terminal device according to an embodiment of this application;
FIG. 7 is another diagram of interaction between a chatbot server and a terminal device according to an embodiment of this application;
FIG. 8 is a diagram of an embodiment of a communication method according to an embodiment of this application;
FIG. 9 is a diagram of an embodiment of a communication method according to an embodiment of this application;
FIG. 10 is a diagram of an embodiment of a communication method according to an embodiment of this application;
FIG. 11 is a diagram of a first message according to an embodiment of this application;
FIG. 12 is a diagram of a scenario of a ticket booking service according to an embodiment of this application;
FIG. 13 is a diagram of another structure of a computing apparatus according to an embodiment of this application; and
FIG. 14 is a diagram of a structure of a computing apparatus according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c. a, b, and c may be singular or plural.

For ease of understanding a communication method provided in embodiments of this application, the following describes a system architecture and an application scenario for the communication method provided in embodiments of this application. It may be understood that the system architecture and the scenario described in embodiments of this application are intended to describe the technical solutions in embodiments of this application more clearly, and do not constitute a limitation on the technical solutions provided in embodiments of this application.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" or "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

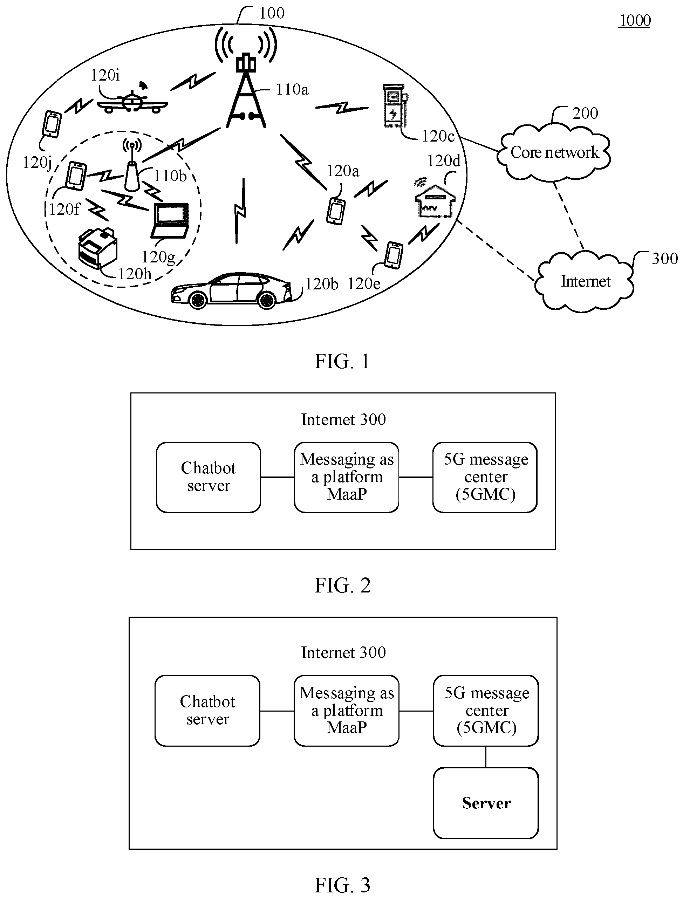

For ease of understanding embodiments of this application, a communication system shown in FIG. 1 is first used as an example to describe in detail a communication system applicable to embodiments of this application. FIG. 1 is a diagram of an architecture of a communication system 1000 used in an embodiment of this application. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminals may be connected to each other in a wired or wireless manner, and radio access network devices may be connected to each other in a wired or wireless manner. FIG. 1 is only an example diagram. The communication system may further include other network devices, for example, may further include a wireless relay device and a wireless backhaul device. This is not shown in FIG. 1.

The radio access network device is an access device through which the terminal accesses the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that implements some functions of a base station, for example, may be a central unit (central unit, CU), or may be a distributed unit (distributed unit, DU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a media access control (media access control, MAC) layer of the base station, and may further complete functions of a part or all of a physical layer. For specific descriptions of the foregoing protocol layers, reference may be made to technical specifications related to the 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communications (machine-type communications, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used for the terminal are not limited in embodiments of this application.

The base station and the terminal may be at fixed locations or are movable. The base station and the terminal may be deployed on land, including an indoor or outdoor device, a handheld device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of a base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may also be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

FIG. 2 is a diagram of a structure of the internet 300 according to an embodiment of this application. A 5G message system is deployed in the internet 300 shown in FIG. 1. The 5G message system specifically includes a chatbot (chat robot, chatbot) server, a messaging as a platform (Messaging as a Platform, MaaP), and a 5G message center (5th Generation Message Center, 5GMC). The chatbot server is configured to provide a communication service for an industry customer. The 5GMC has functions such as 5G message management, distribution, or routing. The MaaP is carried on the 5G message center and is responsible for connecting to industry customers (that is, connecting to the chatbot server), forwarding industry messages (messages carrying a chatbot identifier), and supporting interaction services between personal terminal devices and industry customers (the chatbot server).

It should be noted that the 5G message system shown in FIG. 2 is merely a possible example. With evolution of communication technologies, the 5G message system may further change. This is not limited in this embodiment of this application. This embodiment of this application is further applicable to another system that implements a function of the 5G message system. This is not limited in this embodiment of this application.

A communication method provided in embodiments of this application is deployed in a server. The server may be implemented by using software, or may be implemented by using hardware. The server may include code running on the computing instance. The computing instance may include at least one of a physical host (a computing apparatus), a virtual machine, and a container. Further, there may be one or more computing instances. For example, an analysis and processing module may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The server may include at least one computing apparatus. Alternatively, the server may be a device implemented by using an application-specific integrated circuit (application-specific integrated circuit, ASIC) or a programmable logic device (programmable logic device, PLD), or the like. The PLD may be implemented by a complex programmable logic device (complex programmable logical device, CPLD), a field programmable gate array (field programmable gate array, FPGA), generic array logic (generic array logic, GAL), or any combination thereof.

The plurality of computing apparatuses included in the server may be distributed in a same region, or may be distributed in different regions. The plurality of computing apparatuses included in the server may be distributed in a same AZ, or may be distributed in different AZs. Similarly, the plurality of computing apparatuses included in the server may be distributed in a same VPC, or may be distributed in a plurality of VPCs. The plurality of computing apparatuses may be any combination of computing apparatuses such as an ASIC, a PLD, a CPLD, an FPGA, and a GAL.

The server provided in this embodiment of this application is deployed in the internet 300. In a possible example, FIG. 3 is a diagram of another structure of the internet 300 according to an embodiment of this application. The internet 300 includes a chatbot server, a messaging as a platform, a 5G message center, and a server. The server is connected to the 5G message center. After receiving a first message that carries a first chatbot identifier, the 5G message center determines, by using the server, a second chatbot ID corresponding to the first chatbot identifier. The first message is then processed based on the second chatbot ID, to obtain a second message. The second message carries the second chatbot ID.

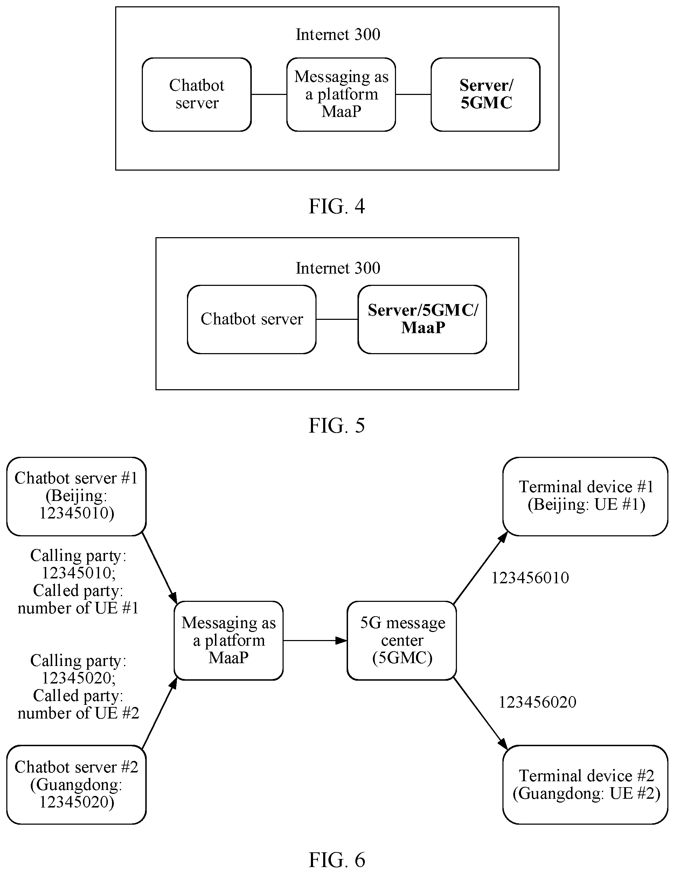

In another possible example, FIG. 4 is a diagram of another structure of the internet 300 according to an embodiment of this application. The internet 300 includes a chatbot server, a messaging as a platform, and a server. The server is co-deployed with the 5G message center.

In another possible example, FIG. 5 is a diagram of another structure of the internet 300 according to an embodiment of this application. The internet 300 includes a chatbot server and a server. The server, a messaging as a platform, and a 5G message center are co-deployed.

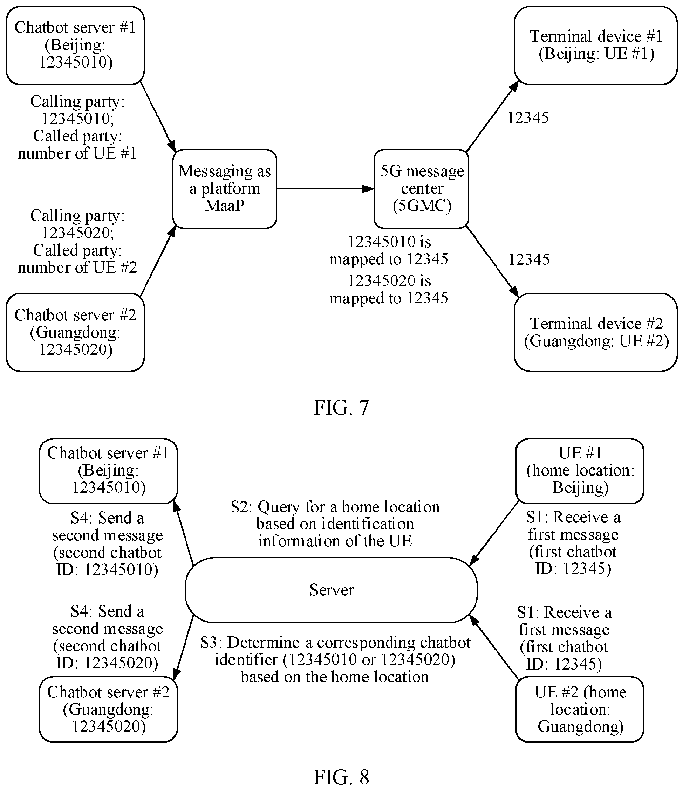

A related application of a chatbot is deployed on the chatbot server, and current interaction between the chatbot server and a terminal device is shown in FIG. 6 or FIG. 7. FIG. 6 is a diagram of interaction between a chatbot server and a terminal device according to an embodiment of this application. FIG. 7 is another diagram of interaction between a chatbot server and a terminal device according to an embodiment of this application.

A service application "12345" is used as an example. The service application 12345 has an independent service in each area, and each area has a unique chatbot identifier (chatbot ID). For example, a chatbot ID of 12345 in Beijing is 12345010, a service of 12345 in Beijing is deployed on a chatbot server #1, and 12345010 corresponds to the chatbot server #1. A chatbot ID of 12345 in Guangdong is 12345020, a service of 12345 in Guangdong is deployed on a chatbot server #2, and 12345010 corresponds to the chatbot server #1. If a user (a terminal device or UE) needs to access a chatbot server, a chatbot ID corresponding to the chatbot server needs to be found. The user then interacts with the chatbot server by using the chatbot ID, and executes a service deployed on the chatbot server.

As shown in FIG. 6, when the chatbot server #1 sends a 5G message to UE #1 (UE located in Beijing), a calling number is 12345010, and a called number is a number of the UE #1. A chatbot ID carried in the 5G message is 12345010. The 5G message is forwarded to the UE #1 through a MaaP and a 5GMC. The UE #1 receives the 5G message, and a number displayed in the 5G message is 12345010. When the chatbot server #2 sends a 5G message to UE #2 (UE located in Guangdong), a calling number is 12345020, and a called number is a number of the UE #2. A chatbot ID carried in the 5G message is 12345020. The 5G message is forwarded to the UE #2 through the MaaP and the 5GMC. The UE #2 receives the 5G message, and a number displayed in the 5G message is 12345020.

As shown in FIG. 7, to help the user memorize the chatbot ID of the service, and prevent the user from mistakenly considering the 5G message carrying the chatbot ID as a junk message or a fake message, currently, a mapping relationship may be maintained in the 5GMC. In the mapping relationship, an independent chatbot ID of each area is mapped to a unified chatbot ID. For example, a unified chatbot ID of the service 12345 is "12345". After receiving a 5G message from the chatbot server, the 5GMC converts an independent chatbot ID included in the 5G message into a unified chatbot ID. For example, a 5G message #1 from the chatbot server #1 carries a chatbot ID 12345010. After processing by the 5GMC, a 5G message #2 is generated. The 5G message #2 carries a chatbot ID 12345. Th 5GMC sends the 5G message #2 to the UE #1.

However, the current solution of converting a plurality of independent chatbot IDs into a unified chatbot ID and presenting the unified chatbot ID to the user cannot support the user in replying to the unified chatbot ID with a 5G message. After receiving the 5G message replied by the user to the unified chatbot ID, a server cannot learn of a chatbot corresponding to an independent chatbot ID to which the 5G message needs to be forwarded. Therefore, user experience is reduced, and a service is limited.

Based on this, an embodiment of this application provides a communication method. A terminal device sends a first message carrying a first chatbot ID to a server. The server determines target configuration information based on the first message, where the target configuration information indicates that the first chatbot ID is mapped to a second chatbot ID by using a constraint of information about the terminal device, and the second chatbot ID corresponds to a target chatbot server. The server determines, based on the second chatbot ID recorded in the target configuration information, that a destination of the first message is the target chatbot server. The server processes the first message based on the target configuration information, to generate a second message carrying the second chatbot ID, and sends the second message to the target chatbot server. In this way, the first message of the terminal device can reach the target chatbot server, so that the terminal device replies to the chatbot server with the message, improving user experience.

The following describes the communication method provided in this embodiment of this application with reference to the accompanying drawings. The information about the terminal device includes but is not limited to a home location of the terminal device, a location of the terminal device, or a selection result of the terminal device. The first chatbot ID is mapped to the second chatbot ID by using the constraint of the information about the terminal device. Therefore, a 5G message processing mode may be classified based on the information about the terminal device. This embodiment of this application may specifically include:

Processing mode A: The information about the terminal device is the home location of the terminal device, and the second chatbot ID to which the first chatbot ID is mapped is determined based on the home location of the terminal device.

Processing mode B: The information about the terminal device is the location of the terminal device, and the second chatbot ID to which the first chatbot ID is mapped is determined based on the location of the terminal device.

Processing mode C: The information about the terminal device is the selection result of the terminal device, and the second chatbot ID to which the first chatbot ID is mapped is determined based on the selection result of the terminal device.

Specifically, the second chatbot ID to which the first chatbot ID is mapped may be determined based on the information about the terminal device.

It should be noted that the foregoing processing modes may be implemented independently of each other, or may be implemented in combination. Processing modes may be configured for chatbot IDs on the server. Different processing modes are configured for different chatbot IDs. For example, the processing mode A is used for a chatbot ID "1000", the processing mode B is used for a chatbot ID "2000", and the processing mode C is used for a chatbot ID "3000".

The following provides separate descriptions. Firstly, the processing mode A is described. The information about the terminal device is the home location of the terminal device, and the second chatbot ID to which the first chatbot ID is mapped is determined based on the home location of the terminal device. FIG. 8 is a diagram of an embodiment of a communication method according to an embodiment of this application. The communication method provided in this embodiment of this application includes the following steps.

S1: A server receives a first message.

**In** step S1, a terminal device sends the first message to the server, and correspondingly, the server receives the first message from the terminal device. The first message may be a 5G message. For example, the first message uses a session initiation protocol (Session Initiation Protocol, SIP). The first message carries a first chatbot ID. The first chatbot ID corresponds to a plurality of chatbot servers. In other words, the first chatbot ID is a unified chatbot ID. For example, for a service "12345", a unified chatbot ID of the service is "12345".

The first message may further carry identification information of the terminal device. In a possible implementation, the identification information of the terminal device may be a number of the terminal device, for example, "13200000000". In another possible implementation, the identification information of the terminal device may alternatively be an internet protocol (Internet Protocol, IP) address of the terminal device. This is not limited in this embodiment of this application.

Further, after the server receives the first message, the server may send a response message of the first message to the terminal device. The response message of the first message indicates that the server has successfully received the first message.

S2: The server queries for a home location based on the identification information of the UE.

In step S2, the server queries for the home location of the terminal device based on the identification information of the terminal device that is carried in the first message.

In a possible implementation, the server determines, based on the number of the terminal device, a number segment to which the number of the terminal device belongs. The home location of the terminal device is determined based on the number segment to which the number of the terminal device belongs. For example, based on a number of UE #1, it is found that a home location of the UE #1 is Beijing. Based on a number of UE #2, a home location of the UE #2 is Guangzhou.

S3: The server determines a corresponding chatbot identifier based on the home location.

In step S3, after receiving the first message, the server needs to find a destination of the first message. In other words, the server needs to find a chatbot server to which the first message is sent. Because the first chatbot ID carried in the first message is the unified chatbot ID, the server needs to find a second chatbot ID corresponding to the first chatbot ID, and the second chatbot ID is an independent chatbot ID. A target chatbot server can be found by using the second chatbot ID. The target chatbot server is the destination of the first message.

Specifically, the server maintains a configuration information set, where the configuration information indicates an association relationship among the home location of the terminal device, the first chatbot ID (unified chatbot ID), and the second chatbot ID (independent chatbot ID). For example, the configuration information is shown in Table 1.

**Table 1**

| First chatbot ID | Home location of the terminal device | Second chatbot ID | Description |
|---|---|---|---|
| 12345 | Beijing | 12345010 | Beijing operator |
| 12345 | Guangdong | 12345020 | Guangdong operator |

The server queries for the home location of the terminal device based on the identification information of the terminal device that is carried in the first message. Target configuration information corresponding to the home location of the terminal device is then found from the configuration information set maintained by the server. The target configuration information indicates a correspondence between the first chatbot ID and the second chatbot ID.

S4: The server sends a second message to the target chatbot server.

In step S4, after determining the target configuration information, the server processes the first message based on the target configuration information, to generate the second message. Specifically, the first chatbot ID in the first message is replaced with the second chatbot ID. The server routes the second message based on the second chatbot ID, and sends the second message to the target chatbot server corresponding to the second chatbot ID.

For example, when a first message #1 is from the UE #1, the first message #1 carries the number of the UE #1 and the first chatbot ID "12345". The server then determines, based on a number segment to which the number of the UE #1 belongs, that the home location of the UE #1 is Beijing. The target configuration information is determined based on the home location, where the target configuration information indicates that the second chatbot ID whose home location is Beijing is "12345010". The server then determines that the second chatbot ID corresponding to the first chatbot ID carried in the first message #1 is "12345010". The server processes the first message #1 based on the target configuration information, to obtain a second message #1. Specifically, the first chatbot ID "12345" carried in the first message #1 is replaced with the second chatbot ID "12345010", to obtain the second message #1. The server (5GMC) then sends the second message #1 to a MaaP. The MaaP finds a route of the second message #1 based on the second chatbot ID "12345010", and sends the second message #1 to the target chatbot server (namely, a chatbot server associated with 12345010). For example, the target chatbot server is a chatbot server of the Beijing operator (the service "12345"), and the MaaP sends the second message #1 to the chatbot server of the Beijing operator.

For example, the processing mode A is applicable to a service, for example, an operator service, related to the home location of the terminal device.

In this embodiment of this application, according to the foregoing method, the first message of the terminal device can reach the target chatbot server, so that the terminal device replies to the chatbot server with the message, improving user experience. The terminal device does not need to pay attention to the second chatbot ID of each chatbot application, and can interact with the chatbot server by using the first chatbot ID. The second chatbot ID is found based on the home location of the terminal device and the first chatbot ID carried in the first message.

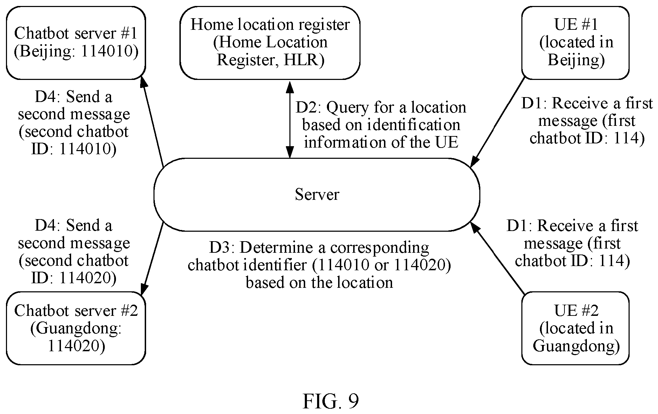

Secondly, the processing mode B is described. The information about the terminal device is the location of the terminal device, and the second chatbot ID to which the first chatbot ID is mapped is determined based on the location of the terminal device. FIG. 9 is a diagram of an embodiment of a communication method according to an embodiment of this application. The communication method provided in this embodiment of this application includes the following steps.

D1: A server receives a first message.

Step D1 is the same as step S1, and details are not described herein again.

D2: The server queries for a location based on identification information of UE.

In step D2, the server queries for the location of the terminal device based on the first message (5G message). In a possible implementation, the server queries for the location of the terminal device based on a number of the terminal device that is carried in the first message. For example, the location of the terminal device is queried for by using a home location register HLR. The location of the terminal device may be represented by an address of a message center (MSC) that provides a service for the terminal device.

In another possible implementation, the server queries for the location of the terminal device based on an IP address of the terminal device.

In still another possible implementation, the server sends a request message to the terminal device, where the request message is used to request the terminal device to report current location information of the terminal device. The server then determines the location of the terminal device based on a response message (carrying location information of the terminal device) of the terminal device.

It should be noted that a manner of querying for the location of the terminal device is not limited in this embodiment of this application.

D3: The server determines a corresponding chatbot identifier based on the location.

In step D3, after determining the location of the terminal device, the server determines target configuration information from a configuration information set based on the location of the terminal device and a first chatbot ID. The target configuration information indicates an association relationship among the location of the terminal device, the first chatbot ID, and a second chatbot ID.

Specifically, the server maintains the configuration information set, where the configuration information indicates the association relationship among the location of the terminal device, the first chatbot ID (unified chatbot ID), and the second chatbot ID (independent chatbot ID). For example, the configuration information is shown in Table 2.

**Table 2**

| First chatbot ID | Location of the terminal device | Second chatbot ID | Description |
|---|---|---|---|
| 12345 | Beijing | 12345010 | Beijing Water |
| 12345 | Guangdong | 12345020 | Guangdong Water |

The server queries for the location of the terminal device based on the identification information of the terminal device that is carried in the first message. The target configuration information corresponding to the location of the terminal device is then found from the configuration information set maintained by the server. The target configuration information indicates a correspondence between the first chatbot ID and the second chatbot ID.

D4: The server sends a second message to a target chatbot server.

In step D4, after determining the target configuration information, the server processes the first message based on the target configuration information, to generate the second message. Specifically, the first chatbot ID in the first message is replaced with the second chatbot ID. The server routes the second message based on the second chatbot ID, and sends the second message to the target chatbot server corresponding to the second chatbot ID.

Specifically, step D4 is similar to the foregoing step S4, and details are not described herein again.

For example, the processing mode B is applicable to a region-related service, including but not limited to a banking service, a citizen hotline, a water supply service, a power supply service, a hospital, a school, a broadband service, or the like.

In this embodiment of this application, according to the foregoing method, the first message of the terminal device can reach the target chatbot server, so that the terminal device replies to the chatbot server with the message, improving user experience. The terminal device does not need to pay attention to the second chatbot ID of each chatbot application, and can interact with the chatbot server by using the first chatbot ID. The second chatbot ID is found based on the location of the terminal device and the first chatbot ID carried in the first message.

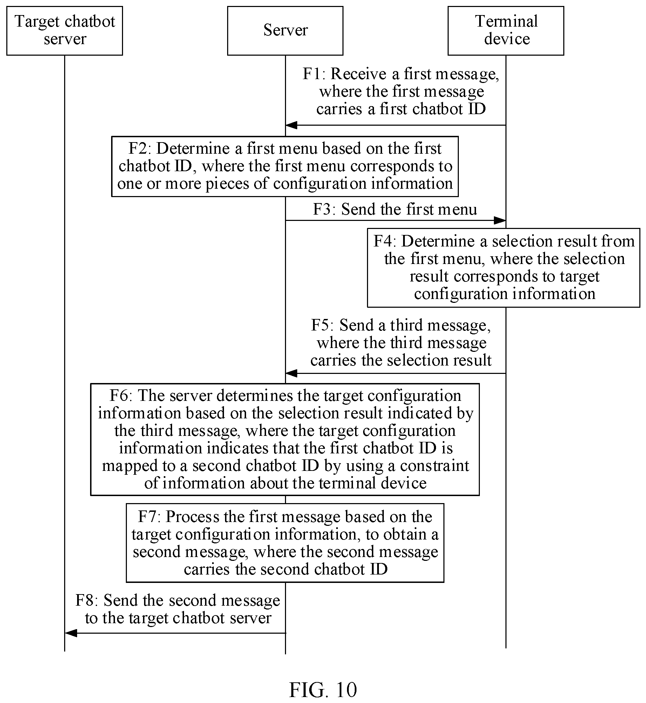

Thirdly, the processing mode C is described. The information about the terminal device is the selection result of the terminal device, and the second chatbot ID to which the first chatbot ID is mapped is determined based on the selection result of the terminal device. FIG. 10 is a diagram of an embodiment of a communication method according to an embodiment of this application. The communication method provided in this embodiment of this application includes the following steps.

F1: A server receives a first message from a terminal device, where the first message carries a first chatbot ID.

In step F1, the terminal device sends the first message to the server, and correspondingly, the server receives the first message from the terminal device. The first message may be a 5G message. For example, the first message uses a session initiation protocol (Session Initiation Protocol, SIP). The first message carries a first chatbot ID. The first chatbot ID corresponds to a plurality of chatbot servers. In other words, the first chatbot ID is a unified chatbot ID. For example, for a service "12345", a unified chatbot ID of the service is "12345".

The first message may further carry identification information of the terminal device. In a possible implementation, the identification information of the terminal device may be a number of the terminal device, for example, "13200000000". In another possible implementation, the identification information of the terminal device may alternatively be an internet protocol (Internet Protocol, IP) address of the terminal device. This is not limited in this embodiment of this application.

Further, after the server receives the first message, the server may send a response message of the first message to the terminal device. The response message of the first message indicates that the server has successfully received the first message.

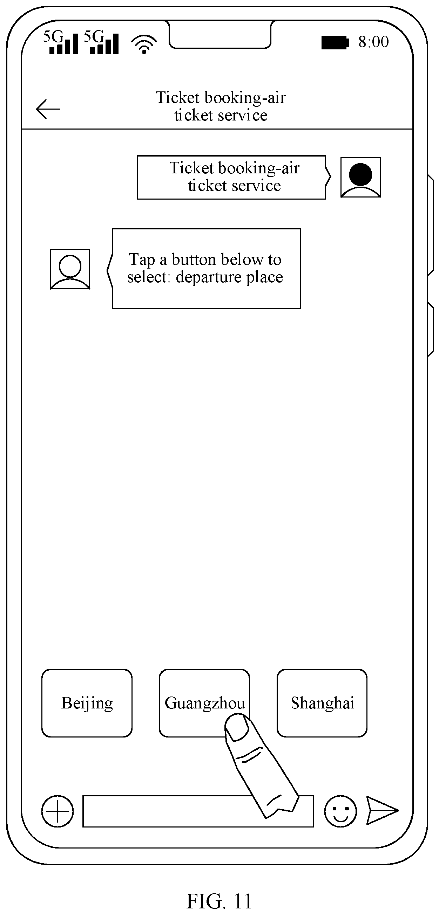

For example, the first message may be a 5G message related to a ticket booking-air ticket service. For example, the first message is a 5G message of a ticket booking-air ticket service. For ease of understanding, FIG. 11 is a diagram of a first message according to an embodiment of this application. A menu interface shown in FIG. 11 is an interface displayed by an application "ticket booking-air ticket service" on the terminal device. A user may send a 5G message: "ticket booking-air ticket service", and the 5G message is used as the first message.

F2: The server determines a first menu based on the first chatbot ID, where the first menu corresponds to a configuration information set.

In step F2, if the server determines, based on the first chatbot ID carried in the first message "air ticket", that the terminal device (the user) needs to book an air ticket, the server determines the first menu based on the first chatbot ID. The first menu includes one or more options, and each option corresponds to a piece of configuration information.

F3: The server sends the first menu to the terminal device.

In step F3, the server sends the first menu to the terminal device, so that the terminal device selects, from the first menu, target configuration information corresponding to the first message. The first menu is carried in a 5G message.

For example, as shown in FIG. 11, the application of the ticket booking-air ticket service displays the first menu to the user (the terminal device) in response to the first message. The options included in the first menu include a plurality of cities such as "Beijing", "Shanghai", "Guangzhou", and "Shenzhen". Each option corresponds to a piece of configuration information.

The first menu may be graphically displayed to the user in a form of a user interface (User Interface, UI) control. For example, in response to the first message: "ticket booking-air ticket service", the application of the ticket booking-air ticket service displays a plurality of user interface UI controls: UI controls corresponding to a plurality of cities such as "Beijing", "Shanghai", "Guangzhou", and "Shenzhen" on a display interface. Each UI control corresponds to a selection result. The user determines a selection result by performing selection on the UI controls, that is, selects a departure place of an air ticket.

F4: The terminal device determines a selection result from the first menu, where the selection result corresponds to the target configuration information.

In step F4, for example, the user taps the UI control "Guangzhou", and the terminal device determines a selection result "Guangzhou" from the first menu. Configuration information corresponding to the selection result "Guangzhou" is the target configuration information.

F5: The terminal device sends a third message to the server, where the third message indicates the selection result.

In step F5, in response to the selection result determined by the terminal device, the terminal device sends the third message to the server, where the third message indicates the selection result. The third message may be a 5G message.

After the terminal device determines the selection result from the first menu (for example, the user taps the UI control "Guangzhou"), the terminal device sends the third message to the server, where the third message indicates that the selection result determined by the terminal device is "Guangzhou".

F6: The server determines the target configuration information based on the selection result indicated by the third message, where the target configuration information indicates that the first chatbot ID is mapped to a second chatbot ID by using a constraint of information about the terminal device.

In step F6, the server determines the target configuration information based on the selection result indicated by the third message. For example, a relationship between the selection result and configuration information is shown in Table 3.

**Table 3**

| First chatbot ID | Selection result | Second chatbot ID | Description |
|---|---|---|---|
| 10001 | Beijing | 10001010 | Beijing air ticket booking service |
| | Guangzhou | 10001020 | Guangzhou air ticket booking service |
| | Shenzhen | 100010755 | Shenzhen air ticket booking service |

The selection result of the terminal device is "Guangzhou", and the third message indicates that the terminal device needs to book an air ticket whose departure place is Guangzhou. In this case, the server determines, from the configuration information, configuration information "Guangzhou-10001020" corresponding to the selection result, and determines that the second chatbot ID is "10001020".

F7: The server processes the first message based on the target configuration information, to obtain a second message, where the second message carries the second chatbot ID.

In step F7, the server processes the first message based on the target configuration information, and maps the first chatbot ID carried in the first message to the corresponding second chatbot ID, to obtain the second message. For example, based on the target configuration information, the second chatbot ID corresponding to the first chatbot ID "10001" is "10001020". The server replaces the first chatbot ID "10001" carried in the first message with the second chatbot ID "10001020", to obtain the second message.

F8: The server sends the second message to a target chatbot server.

In step F8, the server sends the second message based on a route of the second chatbot ID. For example, the server (5GMC) sends the second message to a MaaP. The MaaP determines a route of the second message based on the second chatbot ID "10001020", and sends the second message to the target chatbot server (namely, a chatbot server associated with 10001020). For example, the target chatbot server is a chatbot server of the Guangzhou air ticket booking service, and the MaaP sends the second message to the chatbot server of the Guangzhou air ticket booking service.

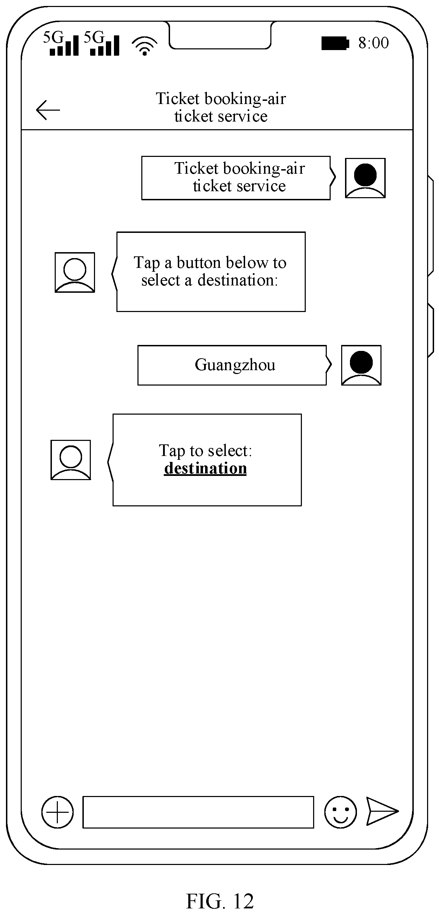

Further, after receiving the second message, the target chatbot server completes related processing. FIG. 11 is used as an example. When the first message is the "ticket booking-air ticket service", in response to the first message, the server sends the second message to a target chatbot server for phone bill enquiry. The target chatbot server sends a 5G message to the terminal device in response to the second message. The 5G message indicates an air ticket destination option whose departure place is Guangzhou. FIG. 12 is a diagram of a scenario of a ticket booking service according to an embodiment of this application. As shown in FIG. 12, in response to the second message, the terminal device receives the 5G message from the server, where the 5G message prompts the user to select a destination of the air ticket.

In this embodiment of this application, according to the foregoing method, the first message of the terminal device can reach the target chatbot server, so that the terminal device replies to the chatbot server with the message, improving user experience. The terminal device does not need to pay attention to the second chatbot ID of each chatbot application, and can interact with the chatbot server by using the first chatbot ID. The second chatbot ID is found based on the selection result of the terminal device and the first chatbot ID carried in the first message. The server can freely configure that the first chatbot ID is mapped to the second chatbot ID by using the constraint of the information about the terminal device. The server determines, based on the selection result of the terminal device, the second chatbot ID corresponding to the current first chatbot ID, to implement flexible service configuration.

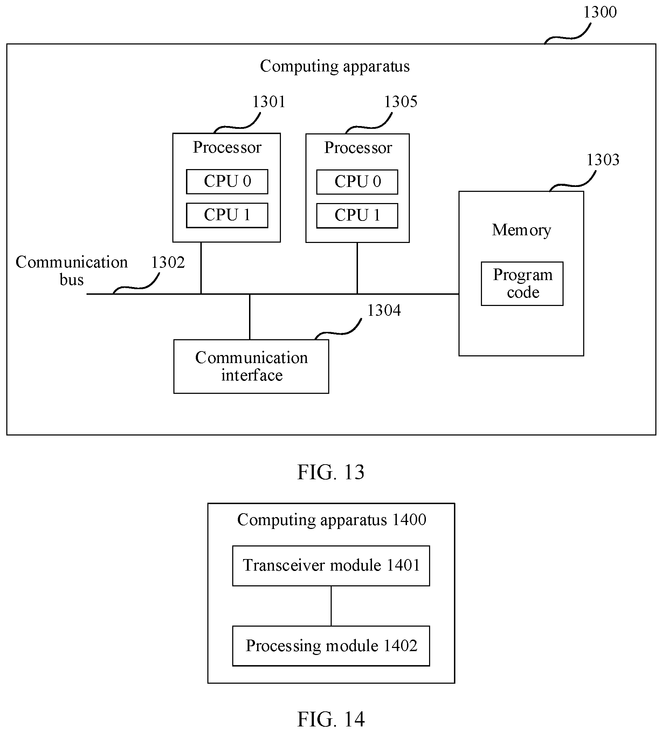

FIG. 13 is a diagram of another structure of a computing apparatus according to an embodiment of this application. As shown in FIG. 13, the computing apparatus 1300 is implemented by using a general bus architecture.

The computing apparatus 1300 includes at least one processor 1301, a communication bus 1302, a memory 1303, and at least one communication interface 1304.

The processor 1301, the memory 1303, and the communication interface 1304 communicate through the communication bus 1302, or may communicate through wireless transmission or in another manner. The memory 1303 is configured to store instructions, and the processor 1301 is configured to execute the instructions stored in the memory 1303. The memory 1303 stores program code, and the processor 1301 may invoke the program code stored in the memory 1303 to perform step S1 to step S4, step D1 to step D4, or step F1 to step F8 in the embodiments shown in FIG. 8 to FIG. 10. For specific implementation, refer to specific descriptions of step S1 to step S4, step D1 to step D4, or step F1 to step F8 in the embodiments shown in FIG. 8 to FIG. 10. Details are not described herein again.

Optionally, the processor 1301 is a general-purpose central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device (programmable logic device, PLD), a transistor logic device, a hardware component, or any combination thereof. The PLD is a complex programmable logic device (complex programmable logic device, CPLD), a field programmable gate array (field programmable gate array, FPGA), generic array logic (generic array logic, GAL), or any combination thereof.

The communication bus 1302 is configured to transmit information between the processor 1301, the memory 1303, and the communication interface 1304. The communication bus 1302 is classified into an address bus, a data bus, a control bus, and the like. For ease of representation, only one line is used for representation in the figure, but it does not indicate that there is only one bus or one type of bus.

Optionally, the memory 1303 is a read-only memory (read-only memory, ROM) or another type of static storage device that can store static information and instructions. Alternatively, the memory 1303 is a random access memory (random access memory, RAM) or another type of dynamic storage device that can store information and instructions. Alternatively, the memory 1303 is an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. Optionally, the memory 1303 exists independently, and is connected to the processor 1301 through the communication bus 1302. Alternatively, the memory 1303 is integrated with the processor 1301.

The communication interface 1304 is configured to communicate with another device or a communication network by using any transceiver-type apparatus. The communication interface 1304 includes a wired communication interface. Optionally, the communication interface 1304 further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

During specific implementation, in an embodiment, the processor 1301 includes one or more CPUs, such as a CPU 0 and a CPU 1 in FIG. 13.

During specific implementation, in an embodiment, the computing apparatus 1300 includes a plurality of processors such as the processor 1301 and a processor 1305 in FIG. 13. Each of the processors is a single-core processor (single-CPU) or a multi-core processor (multi-CPU). The processor herein refers to one or more devices, circuits, and/or processing cores configured to process data (for example, computer program instructions).

In some embodiments, the memory 1303 is configured to store program code for executing the solutions of this application. The processor 1301 executes the program code stored in the memory 1303. In other words, the computing apparatus 1300 implements the foregoing embodiments of the communication method by using the processor 1301 and the program code in the memory 1303.

It may be understood that the steps of the method in embodiments of this application may be implemented in hardware, or may be implemented in software instructions that may be executed by the processor 1301. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. In addition, a range of the apparatus described in this application is not limited thereto, and a structure of the apparatus may not be limited by FIG. 13. The apparatus may be an independent device, or may be a part of a large device. For example, the apparatus may be:
(1) an independent integrated circuit IC, a chip, or a chip system or subsystem;
(2) a set including one or more ICs, where optionally, the IC set may further include a storage component configured to store data and/or instructions;
(3) a module that can be embedded in another device;
(4) a receiver, a terminal, an intelligent terminal, a wireless device, a handheld device, a mobile unit, a vehicle-mounted device, an artificial intelligence device, a machine device, a home device, a medical device, an industrial device, and the like;
(5) others.

In a possible example, the computing apparatus 1300 is used in a server, and the computing apparatus 1300 includes:
a communication interface 1304, configured to receive a first message from a terminal device, where the first message carries a first chatbot identifier chatbot ID, and the first chatbot ID corresponds to a plurality of chatbot servers.

The communication interface 1304 is further configured to send a second message to a target chatbot server, where a second chatbot ID is obtained based on target configuration information and the first chatbot ID, the second message carries the second chatbot ID, the target configuration information indicates that the first chatbot ID is mapped to the second chatbot ID by using a constraint of information about the terminal device, and the second chatbot ID corresponds to the target chatbot server.

In a possible implementation, the first message is a 5th generation mobile communication technology 5G message.

In a possible implementation, the first message further includes identification information of the terminal device.

In a possible implementation,
the processor 1301 is configured to determine the target configuration information based on the identification information of the terminal device that is carried in the first message, where a home location of the terminal device is determined based on the identification information of the terminal device, the target configuration information an association relationship among the home location of the terminal device, the first chatbot ID, and the second chatbot ID, the information about the terminal device is the home location of the terminal device, and the home location of the terminal device is determined based on the identification information of the terminal device

In a possible implementation, when the identification information of the terminal device is a number of the terminal device, the home location of the terminal device is determined based on a number segment to which the number of the terminal device belongs.

In a possible implementation,
the processor 1301 is configured to determine the target configuration information based on the identification information of the terminal device that is carried in the first message, where a location of the terminal device is determined based on the identification information of the terminal device, the target configuration information includes an association relationship among the location of the terminal device, the first chatbot ID, and the second chatbot ID, the information about the terminal device is the location of the terminal device, and the location of the terminal device is determined based on the identification information of the terminal device.

In a possible implementation, the processor 1301 is further configured to send a first menu to the terminal device based on the first message, where the first menu corresponds to the first chatbot ID, and the first menu corresponds to a configuration information set.

The communication interface 1304 is further configured to receive a third message from the terminal device, where the third message indicates a selection result, the selection result corresponds to the target configuration information, and the target configuration information belongs to the configuration information set.

The processor 1301 is further configured to determine the target configuration information from the configuration information set based on the third message, where the information about the terminal device is the selection result.

In a possible implementation, the first menu is carried in a 5G message, and the third message is a 5G message.

In a possible implementation, the first message uses a session initiation protocol SIP.

In a possible implementation, the communication interface 1304 is further configured to forward the second message to the target chatbot server through a messaging as a platform MaaP.

In a possible implementation, the server is deployed in a 5G message center 5GMC.

In still another possible example, the computing apparatus 1300 is used in a terminal device, and the computing apparatus 1300 includes:
a communication interface 1304, configured to send a first message to a server, where the first message carries a first chatbot identifier chatbot ID.

The communication interface 1304 is further configured to receive a first menu from the server, where the first menu corresponds to the first chatbot ID, and the first menu corresponds to a configuration information set.

The communication interface 1304 is further configured to send a third message to the server, where the third message indicates a selection result, the selection result corresponds to target configuration information, the target configuration information belongs to the configuration information set, the target configuration information indicates that the first chatbot ID is mapped to a second chatbot ID by using a constraint of information about the terminal device, the second chatbot ID corresponds to a target chatbot server, the target chatbot server is configured to process a second message, the second message is obtained by processing the first message, the second message carries the second chatbot ID, and the information about the terminal device is the selection result.

In a possible implementation, the first message is a 5th generation mobile communication technology 5G message.

The first menu is carried in a 5G message.

The third message is a 5G message.

FIG. 14 is a diagram of a structure of a computing apparatus according to an embodiment of this application.

In a possible example, the computing apparatus 1400 is used in a server, and the computing apparatus 1400 includes:
a transceiver module 1401, configured to receive a first message from a terminal device, where the first message carries a first chatbot identifier chatbot ID, and the first chatbot ID corresponds to a plurality of chatbot servers.

The transceiver module 1401 is further configured to send a second message to a target chatbot server, where the second message carries a second chatbot ID, the second chatbot ID is obtained based on target configuration information and the first chatbot ID, the target configuration information indicates that the first chatbot ID is mapped to the second chatbot ID by using a constraint of information about the terminal device, the second chatbot ID corresponds to the target chatbot server, and the target chatbot server belongs to the plurality of chatbot servers.

In a possible implementation, the first message is a 5th generation mobile communication technology 5G message.

In a possible implementation, the first message further includes identification information of the terminal device.

In a possible implementation,
a processing module 1402 is configured to determine the target configuration information based on the identification information of the terminal device that is carried in the first message, where the target configuration information includes an association relationship among a home location of the terminal device, the first chatbot ID, and the second chatbot ID, the information about the terminal device is the home location of the terminal device, and the home location of the terminal device is determined based on the identification information of the terminal device.

In a possible implementation, when the identification information of the terminal device is a number of the terminal device, the home location of the terminal device is determined based on a number segment to which the number of the terminal device belongs.

In a possible implementation,
the processing module 1402 is configured to determine the target configuration information based on the identification information of the terminal device that is carried in the first message, where the target configuration information includes an association relationship among a location of the terminal device, the first chatbot ID, and the second chatbot ID, the information about the terminal device is the location of the terminal device, and the location of the terminal device is determined based on the identification information of the terminal device.

In a possible implementation, the processing module 1402 is further configured to send a first menu to the terminal device based on the first message, where the first menu corresponds to the first chatbot ID, and the first menu corresponds to a configuration information set.

The transceiver module 1401 is further configured to receive a third message from the terminal device, where the third message indicates a selection result, the selection result corresponds to the target configuration information, and the target configuration information belongs to the configuration information set.

The processing module 1402 is further configured to determine the target configuration information from the configuration information set based on the third message, where the information about the terminal device is the selection result.

In a possible implementation, the first menu is carried in a 5G message, and the third message is a 5G message.

In a possible implementation, the first message uses a session initiation protocol SIP.

**In** a possible implementation, the transceiver module 1401 is further configured to forward the second message to the target chatbot server through a messaging as a platform MaaP.

**In** a possible implementation, the server is deployed in a 5G message center 5GMC.

**In** another possible example, the computing apparatus 1400 is used in a terminal device, and the computing apparatus 1400 includes:
a transceiver module 1401, configured to send a first message to a server, where the first message carries a first chatbot identifier chatbot ID.

The transceiver module 1401 is further configured to receive a first menu from the server, where the first menu corresponds to the first chatbot ID, and the first menu corresponds to a configuration information set.

The transceiver module 1401 is further configured to send a third message to the server, where the third message indicates a selection result, the selection result corresponds to target configuration information, the target configuration information belongs to the configuration information set, the target configuration information indicates that the first chatbot ID is mapped to a second chatbot ID by using a constraint of information about the terminal device, the second chatbot ID corresponds to a target chatbot server, the target chatbot server is configured to process a second message, the second message is obtained by processing the first message, the second message carries the second chatbot ID, and the information about the terminal device is the selection result.

**In** a possible implementation, the first message is a 5th generation mobile communication technology 5G message.

The first menu is carried in a 5G message.

The third message is a 5G message.

An embodiment of this application further provides a computer program product. When the computer program product is run on a computer, the computer is enabled to perform steps performed by a computer device in the methods described in the embodiments shown in FIG. 8 to FIG. 10.

An embodiment of this application further provides a computer-readable storage medium. The computer-readable storage medium stores a program used for signal processing. When the program is run on a computer, the computer is enabled to perform steps performed by an execution device in the methods described in the embodiments shown in FIG. 8 to FIG. 10.

The communication apparatus provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the communication methods described in the embodiments shown in FIG. 8 to FIG. 10. Optionally, the storage unit is a storage unit in the chip, and is, for example, a register or a buffer. Alternatively, the storage unit may be a storage unit in a wireless access device but outside the chip, and is, for example, a read-only memory (read-only memory, ROM), another type of static storage device that can store static information and instructions, or a random access memory (random access memory, RAM).

It may be understood that the apparatus and the method described in this application may alternatively be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

Embodiments in this specification are described in a progressive manner. For same or similar parts in embodiments, refer to each other. Each embodiment focuses on a difference from other embodiments.

Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division and may be other division during actual application implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in an electric manner or another similar form. This is not limited in this application. In addition, units or subunits described as separate parts may be or may not be physically separated, may be or may not be physical units, or may be distributed to a plurality of circuit units. Some or all of the units may be selected based on an actual requirement to achieve an objective of the solutions in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Numerals used in embodiments of this application are merely used for differentiation for ease of description, but do not limit the scope of embodiments of this application. Sequence numbers of the foregoing processes do not mean an execution sequence, and the execution sequence of the processes should be determined based on functions and internal logic of the processes.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A communication method, comprising:
receiving, by a server, a first message from a terminal device, wherein the first message carries a first chatbot identifier chatbot ID, and the first chatbot ID corresponds to a plurality of chatbot servers; and
sending, by the server, a second message to a target chatbot server, wherein the second message carries a second chatbot ID, the second chatbot ID is obtained based on target configuration information and the first chatbot ID, the target configuration information indicates that the first chatbot ID is mapped to the second chatbot ID by using a constraint of information about the terminal device, the second chatbot ID corresponds to the target chatbot server, and the target chatbot server belongs to the plurality of chatbot servers.

2. The method according to claim 1, wherein the first message further comprises identification information of the terminal device.

3. The method according to claim 2, wherein the method further comprises:
determining, by the server, the target configuration information based on the identification information of the terminal device that is carried in the first message, wherein the target configuration information comprises an association relationship among a home location of the terminal device, the first chatbot ID, and the second chatbot ID, the information about the terminal device is the home location of the terminal device, and the home location of the terminal device is determined based on the identification information of the terminal device.

4. The method according to claim 3, wherein when the identification information of the terminal device is a number of the terminal device, the home location of the terminal device is determined based on a number segment to which the number of the terminal device belongs.

5. The method according to claim 2, wherein the method further comprises:
determining, by the server, the target configuration information based on the identification information of the terminal device that is carried in the first message, wherein the target configuration information comprises an association relationship among a location of the terminal device, the first chatbot ID, and the second chatbot ID, the information about the terminal device is the location of the terminal device, and the location of the terminal device is determined based on the identification information of the terminal device.

6. The method according to claim 1, wherein the method further comprises:
sending, by the server, a first menu to the terminal device based on the first message, wherein the first menu corresponds to the first chatbot ID, and the first menu corresponds to a configuration information set;
receiving, by the server, a third message from the terminal device, wherein the third message indicates a selection result, the selection result corresponds to the target configuration information, and the target configuration information belongs to the configuration information set; and
determining, by the server, the target configuration information from the configuration information set based on the third message, wherein the information about the terminal device is the selection result.

7. The method according to claim 6, wherein the first menu is carried in a 5th generation mobile communication technology 5G message, and the third message is a 5G message.

8. The method according to any one of claims 1 to 7, wherein the first message is a 5th generation mobile communication technology 5G message.

9. The method according to any one of claims 1 to 8, wherein the first message uses a session initiation protocol SIP.

10. The method according to any one of claims 1 to 9, wherein the sending, by the server, a second message to a target chatbot server comprises:
forwarding, by the server, the second message to the target chatbot server through a messaging as a platform MaaP.

11. The method according to any one of claims 1 to 10, wherein the server is deployed in a 5G message center 5GMC.

12. A communication method, comprising:
sending, by a terminal device, a first message to a server, wherein the first message carries a first chatbot identifier chatbot ID;
receiving, by the terminal device, a first menu from the server, wherein the first menu corresponds to the first chatbot ID, and the first menu corresponds to a configuration information set; and
sending, by the terminal device, a third message to the server, wherein the third message indicates a selection result, the selection result corresponds to target configuration information, the target configuration information belongs to the configuration information set, the target configuration information indicates that the first chatbot ID is mapped to a second chatbot ID by using a constraint of information about the terminal device, the second chatbot ID corresponds to a target chatbot server, the target chatbot server is configured to process a second message, the second message is obtained by processing the first message, the second message carries the second chatbot ID, and the information about the terminal device is the selection result.

13. The method according to claim 12, wherein
the first message is a 5th generation mobile communication technology 5G message;
the first menu is carried in a 5G message; and
the third message is a 5G message.

14. A computing apparatus, wherein the computing apparatus is used in a server, and the computing apparatus comprises:
a transceiver module, configured to receive a first message from a terminal device, wherein the first message carries a first chatbot identifier chatbot ID, and the first chatbot ID corresponds to a plurality of chatbot servers, wherein
the transceiver module is further configured to send a second message to a target chatbot server, wherein the second message carries a second chatbot ID, the second chatbot ID is obtained based on target configuration information and the first chatbot ID, the target configuration information indicates that the first chatbot ID is mapped to the second chatbot ID by using a constraint of information about the terminal device, the second chatbot ID corresponds to the target chatbot server, and the target chatbot server belongs to the plurality of chatbot servers.

15. The computing apparatus according to claim 14, wherein the first message further comprises identification information of the terminal device.

16. The computing apparatus according to claim 15, wherein the computing apparatus further comprises a processing module, wherein
the processing module is configured to determine the target configuration information based on the identification information of the terminal device that is carried in the first message, wherein the target configuration information comprises an association relationship among a home location of the terminal device, the first chatbot ID, and the second chatbot ID, the information about the terminal device is the home location of the terminal device, and the home location of the terminal device is determined based on the identification information of the terminal device.

17. The computing apparatus according to claim 16, wherein when the identification information of the terminal device is a number of the terminal device, the home location of the terminal device is determined based on a number segment to which the number of the terminal device belongs.

18. The computing apparatus according to claim 15, wherein the computing apparatus further comprises a processing module, wherein
the processing module is configured to determine the target configuration information based on the identification information of the terminal device that is carried in the first message, wherein the target configuration information comprises an association relationship among a location of the terminal device, the first chatbot ID, and the second chatbot ID, the information about the terminal device is the location of the terminal device, and the location of the terminal device is determined based on the identification information of the terminal device.

19. The computing apparatus according to claim 14, wherein the computing apparatus further comprises a processing module, wherein
the processing module is further configured to send a first menu to the terminal device based on the first message, wherein the first menu corresponds to the first chatbot ID, and the first menu corresponds to a configuration information set;
the transceiver module is further configured to receive a third message from the terminal device, wherein the third message indicates a selection result, the selection result corresponds to the target configuration information, and the target configuration information belongs to the configuration information set; and
the processing module is further configured to determine the target configuration information from the configuration information set based on the third message, wherein the information about the terminal device is the selection result.

20. The computing apparatus according to claim 19, wherein the first menu is carried in a 5G message, and the third message is a 5G message.

21. The computing apparatus according to any one of claims 14 to 20, wherein the first message is a 5th generation mobile communication technology 5G message.

22. The computing apparatus according to any one of claims 14 to 21, wherein the first message uses a session initiation protocol SIP.

23. The computing apparatus according to any one of claims 14 to 22, wherein
the transceiver module is further configured to forward the second message to the target chatbot server through a messaging as a platform MaaP.

24. The computing apparatus according to any one of claims 14 to 23, wherein the server is deployed in a 5G message center 5GMC.

25. A computing apparatus, wherein the computing apparatus is used in a terminal device, and the computing apparatus comprises:
a transceiver module, configured to send a first message to a server, wherein the first message carries a first chatbot identifier chatbot ID, wherein
the transceiver module is further configured to receive a first menu from the server, wherein the first menu corresponds to the first chatbot ID, and the first menu corresponds to a configuration information set; and
the transceiver module is further configured to send a third message to the server, wherein the third message indicates a selection result, the selection result corresponds to target configuration information, the target configuration information belongs to the configuration information set, the target configuration information indicates that the first chatbot ID is mapped to a second chatbot ID by using a constraint of information about the terminal device, the second chatbot ID corresponds to a target chatbot server, the target chatbot server is configured to process a second message, the second message is obtained by processing the first message, the second message carries the second chatbot **ID,** and the information about the terminal device is the selection result.

26. The computing apparatus according to claim 25, wherein
the first message is a 5th generation mobile communication technology 5G message;
the first menu is carried in a 5G message; and
the third message is a 5G message.

27. A computing apparatus, comprising a processor and a memory, wherein
the processor stores instructions, and when the instructions are run on the processor, the method according to any one of claims 1 to 13 is implemented.

28. A chip, comprising a processing unit and a power supply circuit, wherein
the power supply circuit supplies power to the processing unit, and the processing unit is configured to perform the method according to any one of claims 1 to 13.

29. A computer-readable storage medium, wherein the computer-readable storage medium stores instructions, and when the instructions are run on a processor, the method according to any one of claims 1 to 13 is implemented.

30. A computer program product, wherein when the computer program product is executed on a processor, the method according to any one of claims 1 to 13 is implemented.
